# EUROPEAN PATENT SPECIFICATION

(11) **EP 1 078 227 B1**
(45) Date of publication and mention of the grant of the patent: **31.07.2002**
(21) Application number: 99922375.3
(22) Date of filing: 20.05.1999
(51) Int. Cl.: G01D 5/26, G01K 5/52, G01L 9/00

(54) **AN OPTICALLY ADDRESSED SENSING SYSTEM**
OPTISCH ADRESSIERBARES MESSSYSTEM
SYSTEME DE DETECTION A ADRESSAGE OPTIQUE

(30) Priority: 20.05.1998 GB 9810789
(43) Date of publication of application: 28.02.2001
(73) Proprietor: Bookham Technology PLC, Abingdon, Oxon OX14 4RY (GB)
(72) Inventor: PECHSTEDT, Ralf-Dieter, Wanatage, Oxon OX12 9HU (GB); McKENZIE, James, Stuart, Middlesex UB8 2PL (GB); LU, Yicheng, Wantage, Oxon OX12 8HE (GB); DE'ATH, James, Canterbury, Kent CT2 7AF (GB)
(74) Representative: Unwin, Stephen Geoffrey
(86) International application number: GB9901604
(87) International publication number: WO9960341

(56) References cited:
- EP-A- 0 448 751
- WO-A-94/11708
- FR-A- 2 676 539
- US-A- 5 619 046

## Description

### FIELD OF INVENTION

This invention relates to an optically addressed sensing system for sensing a parameter such as pressure or temperature, e.g. in an internal combustion engine.

### BACKGROUND OF INVENTION

Optical sensors have been proposed for sensing a wide range of parameters. A variety of different sensing heads have been proposed together with a variety of different processing systems for processing the signals received therefrom. However, known arrangements tend to suffer from a variety of disadvantages and/or are not suitable for volume production.

### DISCLOSURE OF THE INVENTION

The present invention aims to provide an improved sensing system which overcomes many of the disadvantages of the prior art.

It therefore provides, in its first aspect, a sensing system, comprising at least one broadband light source having a coherence length I_{c},
a sensing interferometer comprising first and second optical paths with an optical path difference OPDₛ between them, the second optical path being subject to variation in dependence upon a parameter in the vicinity of the sensing inteflerometer;
the sensing interferometer being optically connected to the light source and to a processing interferometer comprising third and fourth optical paths with an optical path difference OPDₚ between them;
**characterised by:**
the sensing interferometer comprising a diaphragm formed from a first silicon substrate in which a recess is etched or micro-machined in at least one side of the first substrate of which the diaphragm is formed, the optical path difference OPDₛ being determined substantially by the depth of the recess,
the processing interferometer being integrated on a second silicon substrate, the first and second optical paths comprising first and second rib waveguides integrated in the second silicon substrate and fabricated to define OPDp with a high degree of accuracy which is highly repeatable and can be maintained in volume production,
both OPDₛ and OPDₚ being larger than I_{c} and being defined with a similar degree of accuracy so they can be accurately matched to each other so that the modulus of the difference between OPDₛ and OPDₚ is smaller than I_{c}.

The sensing interferometer is preferably connected to the light source and/or the processing interferometer by means of an optical fibre. The optical fibre at the sensing interferometer is then preferably mounted within a tube or ferrule, and the diaphragm mounted to an end face of the tube or a transparent plate mounted thereon.

A transparent plate can be provided on the end face of the tube or substrate, to define the optical cavity between the diaphragm and a surface of the transparent plate.

The sensor can suitably be used to sense pressure within an internal combustion engine.

According to a second aspect of the invention, there is provided a method of manufacturing an optical cavity for use as the sensing interferometer in an optical sensing system as claimed in any preceding Claim, the method comprising the steps of: micromachining or etching a recess in a first silicon substrate to form a diaphragm; securing an end of an optical fibre within a bore in a tube, ferrule or further substrate; optically polishing an end face of the optical fibre and of the tube and bonding the diaphragm to the said end face of the tube by anodic bonding or diffusion bonding so an optical cavity is formed between the diaphragm and the said end face of the optical fibre, and the length of the optical cavity is substantially determined by the depth of the recess.

According to a third aspect of the invention, there is provided a method of manufacturing an optical cavity for use as the sensing interferometer in a sensing system as claimed in any of Claims 1 - 25, the method comprising the steps of: micromachining or etching a recess in a first silicon substrate to form a diaphragm; bonding the diaphragm to one face of a transparent plate by anodic or diffusion bonding so as to define an optical cavity therebetween the length of which is substantially determined by the depth of the recess; bonding the opposite surface of the transparent plate to an end face of a tube, ferrule or further substrate; and securing an end of an optical fibre within the tube or ferrule or further substrate.

Other preferred and optional features of the invention will be apparent from the following description and from the dependent claims of the specification.

### BRIEF DESCRIPTION OF DRAWINGS

The invention will now be further described, merely by way of example, with reference to the accompanying drawings, in which:
Figure 1 is a schematic diagram of a sensor according to one embodiment of the invention;
Figure 2 is a schematic diagram of a sensor cavity used in the sensor of Figure 1;
Figure 3 is a schematic diagram of another embodiment of a sensor according to the invention;
Figures 4a and 4b show cross-sectional views of a sensor diaphragm used in the sensor head of Figure 2;
Figure 5 illustrates a method of fixing an optical fibre in a capillary in the fabrication of a sensor head such as that shown in Figure 2;
Figure 6 illustrates one way of mounting a diaphragm such as shown in Figure 4a or 4b in a sensor head such as that shown in Figure 2;
Figure 7 illustrates another method of fixing an optical fibre in a capillary in the fabrication of a sensor head such as that shown in Figure 2;
Figure 8 illustrates another way of mounting the diaphragm in the sensor head; and
Figure 9 illustrates a still further way of mounting the diaphragm in the sensor head.

### DETAILED DESCRIPTION OF THE EMBODIMENT

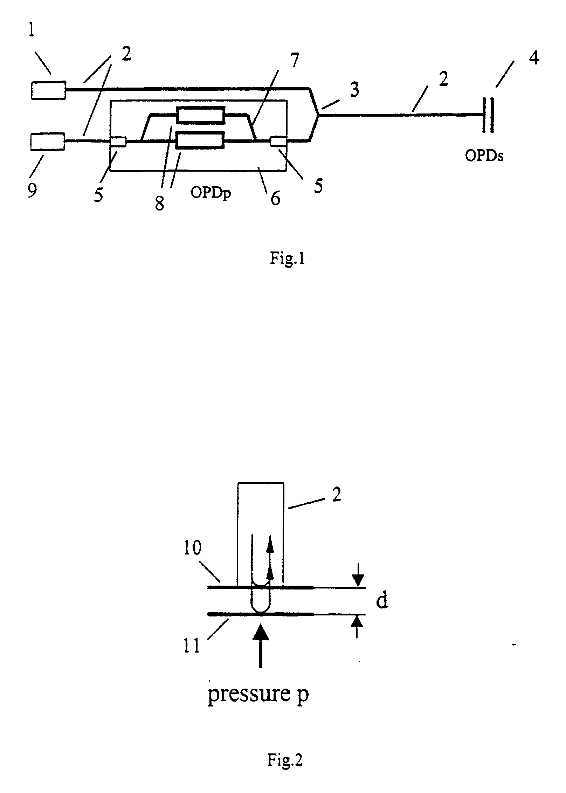

Figure 1 illustrates schematically a white-light measurement system based on a integrated interferometer, ie an interferometer formed of appropriate structures on a single substrate. Light from a broad-band light source 1 is fed into an optical fibre 2 and routed via an optical fibre Y-junction 3 to a pressure sensor head 4. An interference signal returning from the sensor head 4 is analysed by a processing interferometer integrated onto a substrate 6 and an output representing the sensed pressure provided by a light detector 9. In an actual embodiment, the light source and the light detector could be interchanged. However, for simplicity, the remainder of this description will assume that these are arranged as shown in figure 1.

A white-light sensor system is one that employs a broad-band light source, emitting light within a range of wavelengths determined by its spectral width Δλ. The coherence length I_{c} of the source is closely related to the spectral width, and is given by the approximate relationship **I**_{**c**} **∼ λ**_{**peak**}^{**2**}**/Δλ**, with **λ**_{**peak**} being the centre wavelength of the emission spectrum. Typically, Δλ ranges from 30nm to 50nm for superluminescent diodes (SLD) emitting around 1.3µm, resulting in a short coherence length between 55µm and 35µm, respectively.

A schematic of the sensor head is shown in Fig 2. It comprises an optical cavity which essentially consists of two reflective interfaces 10 and 11 connected to the optical fibre 2. The distance d between these two interfaces changes if external pressure p is applied. In its simplest form, interface 10 is created by the fibre-air interface and interface 11 is formed by a diaphragm which deflects in response to the applied pressure. A portion of the light sent to the sensor head is backreflected at the first interface 10. The remaining light is reflected at the second interface 11 and subsequently recaptured by the fibre 2. Hence, an optical path difference OPD_{S} = 2d is created between these two beams returned from the sensor head. The change in distance Δ**d** induced by the applied pressure generates an additional phase shift **Δφ=2πΔd/λ**_{**peak**} on top of the already existing phase difference **φ**_{**0**}**=2π2d/λ**_{**peak**} between the two beams. However, they will not interfere with each other on recombination at the fibre tip as OPDₛ is deliberately designed to be substantially larger than the coherence length I_{c} of the light source. To fulfill this condition it is sufficient in practice that OPD_{S} is about three times larger than the coherence length, leading to a minimum OPD_{S} between 90µm and 150µm. As a result of this design, the additional phase shift Δφ between both beams generated by the applied pressure cannot be recovered using only this single interferometer (the sensing interferometer).

In order to appreciate the advantages of white-light interferometry, it is useful to consider the wavelength domain. After passing through the sensing interferometer with an OPDₛ >> I_{c}, the light from the broad band source contains a number of maxima and minima relating to constructive or destructive interference at the corresponding wavelength. This is referred to as a channelled spectrum. A change in OPDₛ will cause a change in the interference conditions, resulting in a shift in wavelength of the whole channelled spectrum. Hence, the signal information is encoded in the wavelength domain and any intensity fluctuations in the system do not affect the measurement results.

By feeding the output of the sensing interferometer into a second interferometer (the processing interferometer) with an OPDₚ substantially equal to the OPDₛ of the sensing interferometer (| OPDₚ - OPD_{S} I << I_{c}), a portion of the two beams can be brought back in phase again. If the processing interferometer is of substantially the same OPD as the sensing interferometer, a maximum transmission is generated. Due to the limited coherence length of the light source employed, any deviation from the condition OPDₛ = OPDₚ will result in a decrease in visibility until it drops to zero for |OPDₚ - OPDₛ | >> I_{c}. The result is a sinusoidal fringe pattern under a Gaussian-type envelope with the maximum value (central fringe) occurring at OPDₛ = OPDₚ.

In order to maintain a sufficiently high visibility of the signal output, the difference OPDₚ - OPDₛ should be smaller than typically around 5 µm.

The matching of the two OPD's is critical for useful operation of the sensor. As the assembly of the processing interferometer and the sensor head are two independent processes, it is important to be able to control the OPD of both elements separately to a high degree of accuracy.

The control of OPDₚ can be achieved by employing (for example) a Mach―Zehnder interferometer realised in integrated form on an optical chip 6 as shown in Fig 1. The integrated Mach-Zehnder interferometer comprises integrated waveguides 7, including Y-junctions, integrated phase modulators 8, and means 5 for coupling optical fibres to the integrated waveguides 7.

Further details of a suitable integrated interferometer are given in the applicants' co-pending applications GB9623762.3 (Publication no. GB. 2319335A) and PCT/GB97/03144 (Publication no. WO98/22775) and the other applications mentioned therein WO95/08787 and WO97/42534.

By employing an integrated version it is ensured that the OPDₚ of the Mach-Zehnder interferometer can be determined to a very high accuracy. Typically, a variation in OPDₚ of less than 2 to 3 µm is routinely achievable. This accuracy can be maintained in a production process and is highly repeatable.

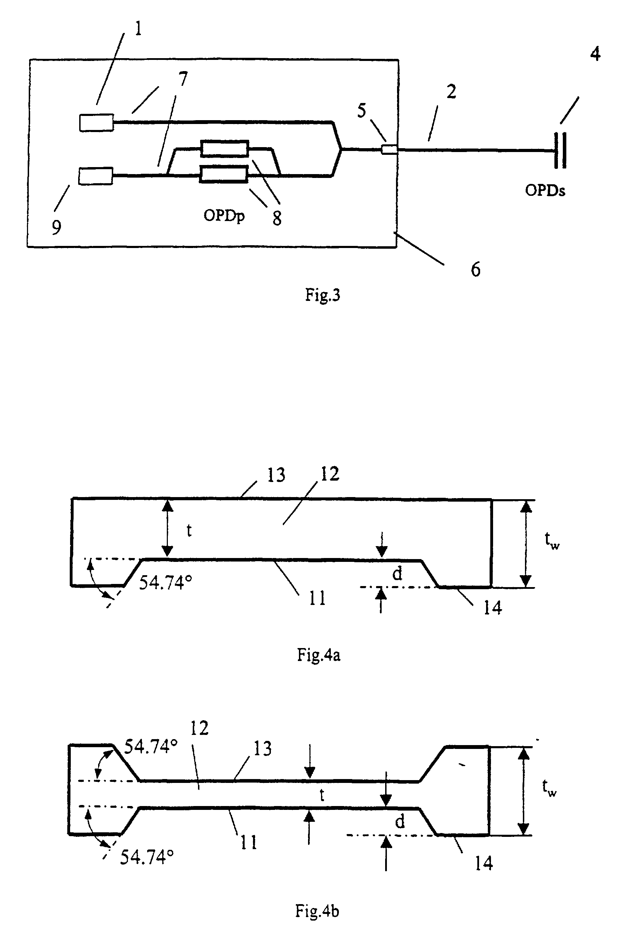

In a preferred embodiment of the sensor, the light source 1 and detector 9 are also integrated on the same chip. The schematic layout of such an arrangement is shown in Figure 3.

The manufacture of a sensor head 4 with an accurately determined OPDₛ which is repeatable in a production process also requires particular attention. For instance, in-fibre Fabry-Perot cavities for pressure sensing have been demonstrated using a section of fibre both ends of which have been coated with a TiO₂ layer to form low reflective mirrors. This section is than spliced onto a lead fibre. In this configuration it is difficult to determine and repeatedly produce an OPD of fixed value to an accuracy of a few microns. Similarly, metal diaphragms could be used in a pressure sensor head cavity but they do not allow for maintenance of a highly accurate cavity length in a manufacturing environment. The fabrication of sensor heads with an accurately determined and reproducible OPD_{S} is thus a critical component of the present invention.

An important aim of the present invention is to describe optical pressure sensor heads which can be made repeatedly and accurately to a specified OPD_{S} so that they can be used in the white-light measurement system employing an integrated processing interferometer, as explained above. The invention uses well established silicon micromachining techniques to produce diaphragms of specified geometrical dimension and pressure sensitivity. This is combined with ways of fixing the diaphragms in front of an optical fibre in order to form a sensing cavity of the required OPD_{S}. Silicon is widely used in mechanical engineering applications due to its excellent mechanical properties. It offers a high degree of dimensional control during processing and can be manufactured on a wafer scale, enabeling cost effective batch fabrication.

The starting point for the manufacture of the diaphragm is a silicon wafer of appropriate thickness t_{w} which is polished at least on one side. A number of chemicals (wet etchants) with varying degree of selectivity to silicon and isotropic or anisotropic etching behaviour are commonly used. For instance, using an anisotropic etchant such as potassium hydroxide, the (100) surface is etched at a rate about 400 times faster than the (111) surface. This leads to the forming of structures with a characteristic angle of 54.74° for a (100) orientated wafer. Appropriate masking techniques use materials such as silicon oxide or silicon nitride in conjunction with different etchants to provide great design flexibility. Fig 4 is a side view of a diaphragm 12 which is formed by one-sided etching of a silicon wafer from its polished side 14.

One key point for the white-light application is that the silicon etch rates are accurately determined by the processing conditions for a given etchant. As a result, the etch depth d is easily controlled to an accuracy of better than about 1 to 2µm under manufacturing conditions. The anisotropic wet etching process provides a flat surface 11 of high surface quality which can be used without any further preparation as one of the interfaces forming the Fabry-Perot sensing cavity. Its reflectivity is determined by the value of the refractive index step between air and silicon. Given a refractive index n_{Si} of 3.5 for silicon at a wavelength of 1310nm and nₐᵢᵣ = 1, the reflectivity R = (n_{Si} - 1)²/(n_{Si} +1)² of the surface 11 equals about 30%. The second interface 10 required to form the sensing cavity can be provided in a number of different ways. In the particular examples considered in more detail below, the second reflective interface is flush with the surface 14. Hence, the OPD of the sensing cavity equals 2dnₐᵢᵣ = 2d and together with the ability to accurately control the etch depth d, this enables the manufacture of sensor heads with an accurately predetermined OPD_{S}.

The portion of light which is not reflected from the first air-silicon interface 11 will propagate through the diaphragm of thickness t and is partly reflected back at the outer silicon-air interface 13, parallel to interface 11. Hence, a second cavity with an OPD equal to 2n_{Si}t is created. This does not have any adverse effects on the system performance, so long as 2n_{Si}t is sufficiently different from the OPD of the sensing cavity OPD_{S}. However, if the design of the diaphragm requires a diaphragm thickness **t** so that 2n_{Si}t roughly equals OPD_{S}, additional measures should be taken to avoid possible signal corruption. Such a design may be required in order to achieve a specific sensitivity within geometrical restrictions, as the diaphragm sensitivity is mainly determined by the diaphragm thickness t and geometrical factors such as its diameter and shape. The adverse effects of the second cavity can be avoided by depositing a thin layer of metal onto the reflecting surface 11 in order to enhance its reflectivity, hence minimising the amount of light in the second cavity.

Several considerations for the choice of metal should be taken into account. The metal should provide a sufficiently high reflection coefficient in the considered wavelength region, it should adhere reliably to silicon and its surface should not degrade over time or in harsh operating conditions such as elevated temperatures. One suitable choice is chromium, which will enhance the reflectivity of the surface 11 to about 60% in the 1310nm wavelength region. This enables the efficient suppression of adverse effects on the system performance generated by the second cavity. The minimum metal thickness is determined by the 'skin' effect of the metal. As long as the deposition thickness exceeds the skin depth, a constant reflection coefficient with increasing thickness is observed. In the case of chromium, a deposition thickness of about 300nm is sufficient. Making the metal layer excessively thick changes the mechanical properties of the diaphragm and enhances the likelihood of adhesion failure.

An additional benefit of depositing a metal layer onto surface 11 is to benefit the overall resolution of the system. Often, the resolution of an optical measurement system based on white-light interferometry is limited by noise generated due to the low level of light power received at the detector. One way of achieving a higher system resolution is to enhance the amount of light returned from the sensor cavity. A metal coating on the inside of the diaphragm will therefore enhance the reflectivity of the surface 11, and hence lead to a higher signal-to-noise ratio.

It will be appreciated that the above discussion is not restricted to the particular diaphragm design shown in Fig 4a and is also valid for other micromachined designs. In particular, it is possible to etch the silicon wafer from both sides, and hence change the sensitivity by reducing the effective diaphragm thickness t for a given diaphragm diameter and fixed etch depth d. A schematic of a double-etched diaphragm is shown in Fig.4b. As a result, this additional design parameter allows changes to be made to the diaphragm sensitivity without requiring changes in the OPD_{S} of the sensing cavity.

The optical pressure sensor described in the present invention is based on a Fabry-Perot type cavity as shown schematically in Fig.2. The following discussion deals with a number of ways of providing the second surface 10 of the sensing cavity. These options ensure the accurate positioning of this surface 10, and together with the high accuracy of the etch depth d, this will provide an accurately predetermined OPD_{S} of the pressure sensor cavity required for proper operation of the white-light system.

### Example 1

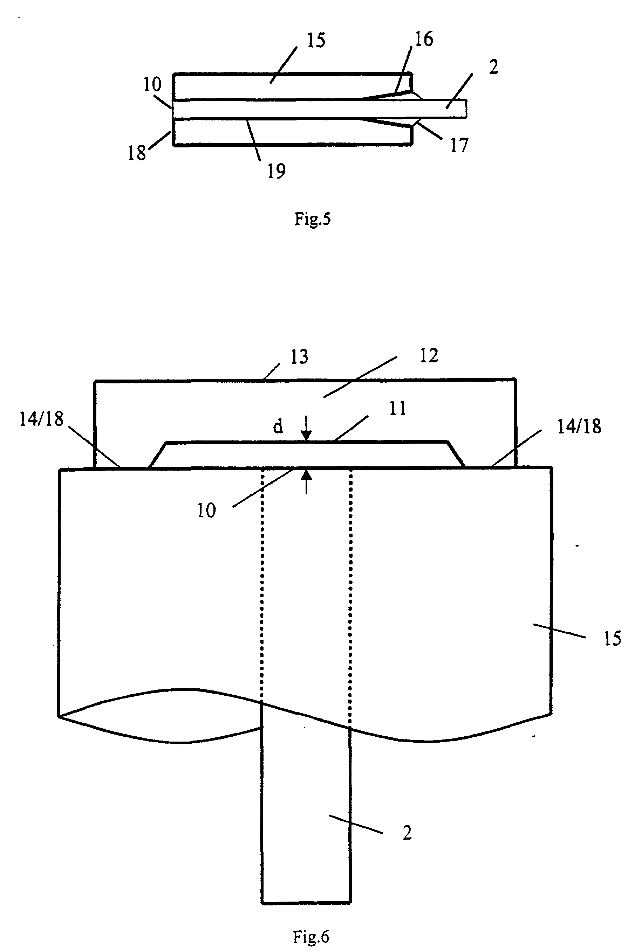

In this case the end face of the optical fibre 2 leading to the sensor head acts as the second reflecting interface 10 of the sensing cavity. The flat air-glass interface is provided by polishing to an optical grade finish, yielding a reflectivity of about 3.5% according to R = (n_{Glass} - 1)²/(n_{Glass} +1)² with n_{Glass} = 1.45 being the refractive index of the optical fibre. In order to polish the fibre and to fix it in front of the diaphragm, an auxiliary support element is required. This is provided by a glass micro-capillary 15 with an inner diameter of about 126 to 128µm to fit a standard single mode fibre with a nominal diameter of 125µm (see Fig 5). The fibre is fixed in the micro-capillary by an appropriate low-viscosity adhesive to provide sufficient bonding between fibre and capillary. It is preferred to use micro-capillaries which have a conical opening 16 at the rear end from which the fibre and adhesive can be easily inserted. In addition, the opening can be filled with adhesive 17 to provide protection for the fibre. Polishing the assembled fibre-capillary assembly will ensure that the polished fibre end 10 is flush with the polished end face 18 of the capillary. The bonding line 19 between fibre and micro-capillary is deliberately kept thin to ensure that damage to the fibre end during polishing is minimised. If the bond line were considerably thicker the polishing procedure would lead to a build-up of stress in the fibre and capillary, resulting in the formation of cracks within the optical fibre. This would damage the light guiding properties of the fibre and render the sensor cavity useless.

By mounting the silicon diaphragm directly onto the micro-capillary as shown in Fig 6, the distance between the two reflective mirrors 10 and 11 of the sensing cavity (and hence OPD_{S}) is accurately determined by the etch depth d of the silicon diaphragm. Two possible ways of mounting techniques are explained in more detail below.

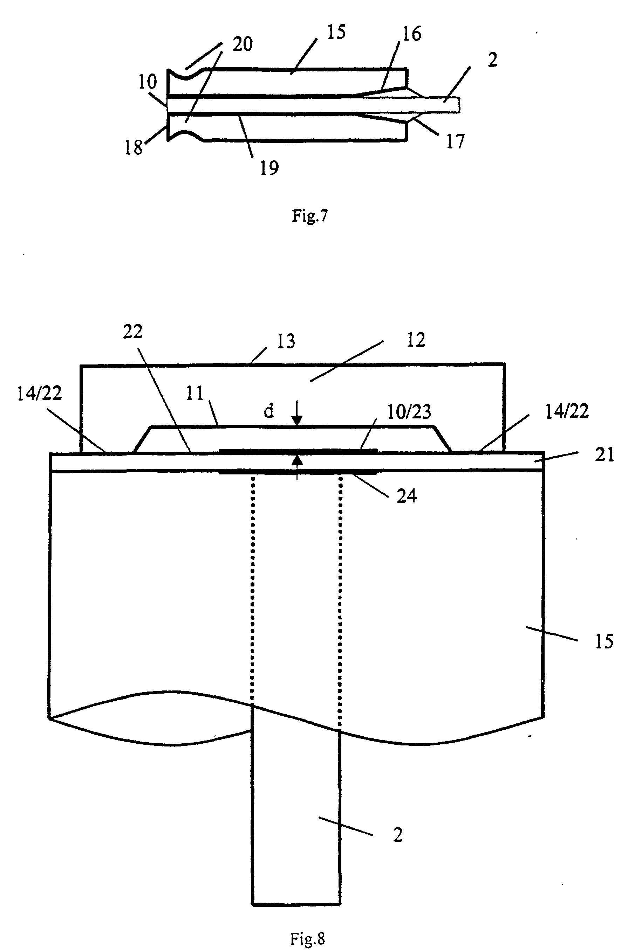

Usually, the fibre mounted in the micro-capillary experiences some degree of temperature induced movement relative to the capillary, mainly due to a possible mismatch in the thermal expansion coefficients between fibre and capillary. In dependence on the temperature changes experienced, typical movements range from nanometers to about one µm. This is not a problem as long as the thermally induced drift is slow in comparison to the timescale of the pressure changes. However, for static or quasi-static pressure measurements any thermally induced drift in the fibre position is interpreted by the system as a pressure change and hence creates a measurement error in the form of a finite temperature-cross sensitivity. It can also be a problem if a dynamic pressure probe is required to operate over a very large temperature range as the associated drift may exceed the tracking range of the processing interferometer. In order to minimise this drift effect, the fibre is rigidly fixed at the front end of the capillary. This can be achieved by locally heating the capillary, employing (for instance) a laser or a localised heating element, and allowing the capillary to collapse along a limited section 20 of up to a few mm's. The micro-capillary is then back-polished until the collapsed region is reached as shown in Fig 7. In this way, any movements induced due to thermal mismatch between fibre and capillary will occur at the back end of the capillary, i.e. near the cone, leaving the position of the reflective surface 10 flush with the front capillary face 18. The adhesive 17 applied to the cone should be somewhat flexible after curing to give way to the small movements involved and at the same time, still protecting the fibre. In this way, the build-up of significant stress levels in the fibre is avoided.

Until now the only requirement regarding the type of glass used for the micro-capillary was that it would be suitable for polishing. However, if the micro-capillary is made of PYREX™ or borosilicate glass, one can take advantage of a process known as anodic bonding in order to fix the silicon diaphragm onto the glass micro-capillary, i.e. bonding surface 14 onto surface 18. Anodic bonding is widely used in the field of silicon micromachining and provides a strong, reliable and hermetic bond. It is a combined thermal and electrostatic process, carried out at elevated temperature with the assistance of an electrostatic field. Both the silicon and the glass surface to be joined must be sufficiently clean and flat The required surface finish is automatically guaranteed in this assembly procedure due to previous process steps. Silicon wafers with one or two sides polished are commercially available and the polishing of the micro-capillary front face 18 was carried out in order to obtain a flat fibre end. Hence, apart from the cleaning of the two surfaces, no additional steps are required for preparation of the anodic bonding process.

### Example 2

In this case, an additional thin, flat transparent cover plate 21 is employed to provide the second reflective interface 10 of the sensing cavity. It is formed by the upper plate interface as shown in Fig 8. This assembly is later fixed onto the micro-capillary 15 holding the optical fibre 2 in place. Two major advantages result from this configuration. First, the OPD_{S} of the sensing cavity is accurately determined by the etch depth of the diaphragm d only. Possible drifts of the fibre within the micro-capillary will not change OPD_{S}. Secondly, the diaphragm-plate assembly can be manufactured on a wafer level. For instance, the thin plate can be formed by a thin borosilicate glass wafer with polished surfaces, which is commercially available. Such a wafer can be anodically bonded onto the silicon wafer into which the diaphragms have been etched.

The addition of the transparent plate creates an additional cavity similar to the cavity formed by the silicon diaphragm itself as discussed above. In order to minimise possible adverse effects, a reflective coating 23 can be applied to the upper surface 22 of the plate 21 in addition to the optional metal coating on the inside of the diaphragm 11. Also, it is possible to apply an antireflection (AR) coating 24 onto the lower side of the plate 21. The application of these coatings are favourably carried out on a wafer-scale level.

After dicing the diaphragm-plate assemblies, they can be fixed onto empty micro-capillaries. The optical fibre is inserted into the capillary afterwards and can be fixed by appropriate adhesive. To ensure proper optical performance, the fibre only has to be cleaved as the fibre end face is no longer part of the cavity. This removes the labour intensive step of polishing capillaries containing a fibre lead at the rear end or the capillary.

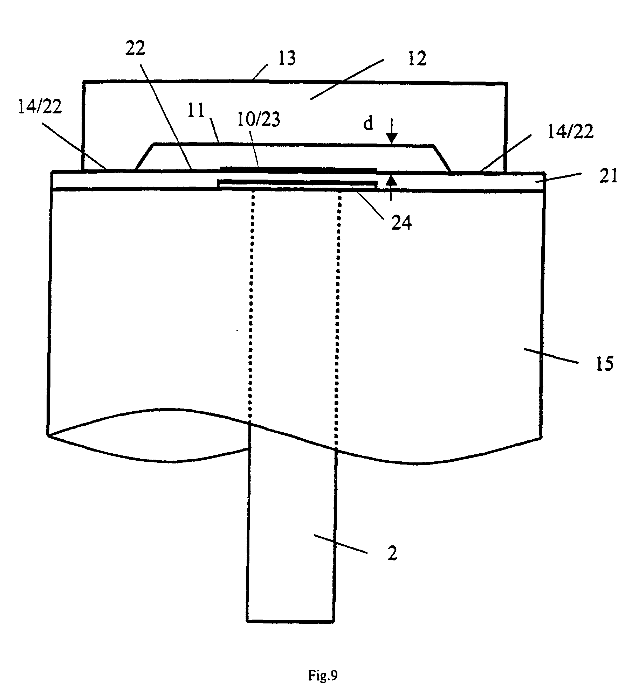

A different realisation of the second option employs a silicon wafer instead of a glass wafer to form the additional plate 21. Bonding the silicon wafers containing the diaphragms to the wafer 21 is achieved by silicon fusion bonding, known to provide a strong, reliable bond. Typically, silicon diffusion bonding requires a much higher processing temperature in comparison to anodic bonding at around 300°C. However, as the diaphragm-plate assembly is fabricated without an optical fibre present, this is not a disadvantage. The advantage of employing a silicon plate is that the diaphragm-plate assembly can be fixed onto a borosilicate micro-capillary by anodic bonding, avoiding the use of adhesives at this stage. As the anodic bonding process relies on a good electrical contact at the glass-silicon interface, the optional AR-coating 24 should be recessed in this case by a small amount. The reason is that AR-coatings are typically formed by a combination of dielectric layers which are electrically isolating. The recess is easily formed by etching the silicon wafer 21 at the appropriate locations (see Fig 9) prior to depositing the AR-coating and carrying out the anodic bonding to the capillary 15.

In the proceeding discussions the use of a borosilicate micro-capillary is described. Alternatively, a quartz micro-capillary could be employed. Quartz glass is easy to polish, and fixtures between the quartz capillary and the silicon wafer can be provided by a process known as diffusion bonding. Similar to anodic bonding, diffusion bonding provides a strong, reliable bond but requires an additional thin layer of metal (for instance, Gold) deposited onto one (or both) corresponding surfaces to facilitate bonding.

Finally, a different way for mounting the fibre in front of the silicon diaphragm makes use of solder glass. Solder glasses are widely used in the electronics industry for sealing purposes, providing robust adhesion and high reliability. This approach replaces the need for fixing the optical fibre in a micro-capillary. Instead of employing a separate glass capillary, a glass tube around the fibre is formed using solder glass. Glass solder softens on heating and at a sufficiently high temperature starts to flow and behave similarly to a liquid. Hence, the solder glass can be made to flow into a cylindrical shape. A large variety of glass powders with different properties are available, or can be designed ad hoc. The difference in thermal expansion coefficients between fibre and solder glass can be minimised through appropriate selection. In this way, the fibre is fixed rigidly in the glass mould. This assembly is polished afterwards to provide the second surface 10 of the sensing cavity. Anodic bonding of the silicon diaphragm to the polished assembly can be carried out if an appropriate type of solder glass is employed.

Solder glass can also be employed to replace adhesive used for fixing the optical fibre in a separately provided micro-capillary as described earlier.

It will be appreciated that the sensor described above relies on the accurate fabrication of both the integrated processing interferometer and the sensing interferometer so that OPDₚ and OPDₛ are accurately matched. The use of etched or micro-machined silicon in the fabrication of a Fabry-Perot sensor cavity has previously been proposed, but only in conjunction with arrangements which suffer from significant disadvantages such as limited dynamic range, sensitivity to losses in the optical fibre leading to the sensor head and to the light source and/or detector and relatively small signal bandwidth. These problems are overcome by combining the use of an integrated processing interferometer with the accurate fabrication of a sensor head which enable the use of a white-light processing technique as described above. Furthermore, it will be appreciated that the sensor described above is suitable for volume manufacture.

It will be appreciated that the invention is not restricted to the measurement of pressure. In more general terms, any environmental change which changes OPD_{S} can be measured, leading to the detailed advantages of the described system for other measurands.

For instance, temperature sensing can be accomplished, for example, with a sensing cavity formed by a plate 12 of silicon bonded to the glass capillary 15 in which the optical fibre 2 is fixed. In this case, the reflective surfaces of the cavity are given by the two surfaces of the plate 12. A change in ambient temperature will change the refractive index of silicon and hence, change the optical path length of the beam reflected at the outer surface. Silicon etching or micromachining can be used to etch an appropriate recess in the outer surface opposite the fibre so that the remaining plate thickness tₚ equals the required OPD_{S} = 2n_{Si}tₚ. As before, OPD_{S} is accurately determined by the etch depth.

Another way to measure temperature would be with a similar sensor head arrangement as shown in Fig. 6, 8 or 9 where the plate 12 is made thick enough so that the distance d of the optical cavity expands or contracts due to expansion or contraction of the raised support of the plate 12 as the temperature changes.

## Claims

1. A sensing system comprising at least one broadband light source (1) having a coherence length I_{c},
a sensing interferometer (4) comprising first and second optical paths with an optical path difference OPDₛ between them, the second optical path being subject to variation in dependence upon a parameter in the vicinity of the sensing interferometer (4);
the sensing interferometer (4) being optically connected to the light source and to a processing interferometer (6) comprising third and fourth optical paths with an optical path difference OPDₚ between them;
**characterised by**:
the sensing interferometer (4) comprising a diaphragm (12) formed from a first silicon substrate in which a recess is etched or micro-machined in at least one side of the first substrate of which the diaphragm (12) is formed, the optical path difference OPDₛ being determined substantially by the depth of the recess,
the processing interferometer (6) being integrated on a second silicon substrate, the first and second optical paths comprising first and second rib waveguides (7) integrated in the second silicon substrate and fabricated to define OPDp with a high degree of accuracy which is highly repeatable and can be maintained in volume production,
both OPDₛ and OPDₚ being larger than I_{c} and being defined with a similar degree of accuracy so they can be accurately matched to each other so that the modulus of the difference between OPDₛ and OPDₚ is smaller than I_{c}.

2. A system as claimed in Claim 1 in which the sensing interferometer (4) is connected to the light source (1) and/or the processing interferometer (6) by means of one or more optical fibres (2).

3. A system as claimed in Claim 2 in which the end of the optical fibre (2) at the sensing interferometer (4) is mounted within a bore in a substrate (15) and the diaphragm (12) mounted to an end face of the said substrate (15) or a transparent plate (21) mounted thereon.

4. A system as claimed in Claim 3 in which the diaphragm (12) is etched to have a centrally recessed sensor region surrounded by a raised support, the support being bonded in place such that the centrally recessed region is over the bore axis, the diaphragm (12) providing a reflective surface (11) forming part of the second optical path of the said sensing interferometer (14).

5. A system as claimed in any preceding claim in which the sensing interferometer (4) includes a sensor comprising a glass substrate (15) including a bore therein for receiving an optical fibre (2), and a further substrate (12) which is etched to form a recessed region surrounded by a raised support, the support being bonded in place such that the recessed region is over the bore axis, **characterised in that** the etching of the further substrate is deeper than 10µm.

6. A system as claimed in Claim 5, said substrate (15) including the bore being a tube or ferrule.

7. A system as claimed in Claims 5 or 6 in which the substrate (15), tube or ferrule is borosilicate glass or quartz glass.

8. A system as claimed in Claim 5, 6 or 7 wherein the bore includes a stop against which the fibre (2) can abut, the bore being a through bore.

9. A system as claimed in any one of Claims 5 to 8 wherein the bore is a blind bore, the end face of the bore providing a stop against which the fibre (2) can abut.

10. A system as claimed in any one of Claim 5 to 9 in which the transparent plate (21) is of silicon or borosilicate glass or quartz glass.

11. A system as claimed in any one of Claim 5 to 10 in which an optical cavity is defined between the said end of the optical fibre (2) and the diaphragm (12) or the transparent plate (21) and the diaphragm (12).

12. A system as claimed in any one of Claim 5 to 11 in which the optical fibre (2) is secured within the bore by adhesive, solder glass, mechanical crimping or collapsing by heating of the substrate (15) surrounding the bore.

13. A system as claimed in any one of Claims 5 to 12 in which a flexible sealant is provided between the optical fibre (2) and the substrate (15) surrounding the bore at the free exit of the bore.

14. A system as claimed in any one of Claim 5 to 13 wherein the securing is limited to the section of the optical fibre (2) within the substrate (15) or tube or ferrule nearest to the end of the fibre (2).

15. A system as claimed in any one of Claim 5 to 14 in which the diaphragm (12) is bonded to the end face of the tube (15) or to a transparent plate (21) mounted thereon by anodic bonding or diffusion bonding.

16. A system as claimed in any one of Claims 5 to 15 in which the reflectivity of one or both of the interfaces (10,11) defining the cavity is increased by the provision of a reflective coating thereon.

17. A system as claimed in any preceding Claim in which the substrate comprising the processing interferometer (6) is silicon-on-insulator.

18. A system as claimed in any preceding Claim in which the processing interferometer (6) is a Mach-Zehnder or Michelson interferometer.

19. A system as claimed in any preceding Claim in which the broadband light source(s) (1) is integrated on the substrate comprising the processing interferometer (6).

20. A system as claimed in any preceding Claim in which a light detector (9) is integrated on the substrate comprising the processing interferometer (6).

21. A system as claimed in any preceding Claim in which the broadband light source (1) is a superluminescent diode.

22. A system as claimed in any preceding Claim in which the coherence length I_{c} of the broadband light source (22) is in the range 35-55 µm.

23. A system as claimed in any preceding Claim in which OPDₛ is in the range 100-160µm.

24. A system as claimed in any preceding Claim in which the difference between OPDₛ and OPDₚ is 5µm or less.

25. A sensing system as claimed in any preceding Claim arranged to sense pressure within an internal combustion engine.

26. A method of manufacturing an optical cavity for use as the sensing interferometer (4) in an optical sensing system as claimed in any preceding Claim, the method comprising the steps of: micromachining or etching a recess in a first silicon substrate to form a diaphragm (12); securing an end of an optical fibre (2) within a bore in a tube, ferrule or further substrate; optically polishing an end face of the optical fibre (2) and of the tube and bonding the diaphragm (12) to the said end face of the tube by anodic bonding or diffusion bonding so an optical cavity is formed between the diaphragm (12) and the said end face of the optical fibre (2), and the length of the optical cavity is substantially determined by the depth of the recess.

27. A method of manufacturing an optical cavity for use as the sensing interferometer (4) in a sensing system as claimed in any of Claims 1 - 25, the method comprising the steps of: micromachining or etching a recess in a first silicon substrate to form a diaphragm (12); bonding the diaphragm (12) to one face of a transparent plate by anodic or diffusion bonding so as to define an optical cavity therebetween the length of which is substantially determined by the depth of the recess; bonding the opposite surface of the transparent plate (21) to an end face of a tube, ferrule or further substrate; and securing an end of an optical fibre within the tube or ferrule or further substrate.

## Patentansprüche

1. Abfühlsystem, umfassend wenigstens eine Breitband-Lichtquelle (1) mit einer Kohärenzlänge I_{c},
ein Abfühl-Interferometer (4), umfassend einen ersten und einen zweiten Lichtweg mit einer Gangdifferenz OPDₛ dazwischen, wobei der zweite Lichtweg Variationen in Abhängigkeit von einem Parameter in der Nähe des Abfühl-Interferometers (4) unterliegt;
wobei das Abfühl-Interferometer (4) optisch mit der Lichtquelle und einem Verarbeitungsinterferometer (6) verbunden ist, der einen dritten und einen vierten Lichtweg mit einer Gangdifferenz OPDₚ dazwischen umfasst; **dadurch gekennzeichnet, dass**:
das Abfühl-Interferometer (4) eine Membran (12) umfasst, die aus einem ersten Siliziumsubstrat gebildet ist, wobei eine Ausnehmung in wenigstens eine Seite des Siliziumsubstrats, aus dem die Membran (12) gebildet ist, geätzt oder mikrobearbeitet wurde, wobei die Gangdifferenz OPDₛ im Wesentlichen durch die Tiefe der Ausnehmung bestimmt wird,
wobei das Verarbeitungsinterferometer (6) auf einem zweiten Siliziumsubstrat integriert ist, wobei der erste und der zweite Lichtweg einen ersten und einen zweiten Rippenhohlleiter (7) umfassen, die in dem zweiten Siliziumsubstrat integriert und so gestaltet sind, dass sie OPDₚ mit einem hohen Maß an Genauigkeit definieren können, das eine hohe Wiederholbarkeit hat und in der Serienproduktion aufrecht erhalten werden kann,
wobei OPDₛ und OPDₚ größer sind als I_{c} und mit einem ähnlichen Maß an Genauigkeit definiert werden, so dass sie genau aufeinander abgestimmt werden können, so dass der Modulus der Differenz zwischen OPDₛ und OPDₚ kleiner als I_{c} ist.

2. System nach Anspruch 1, bei dem das Abfühl-Interferometer (4) mit der Lichtquelle (1) und/oder dem Verarbeitungsinterferometer (6) mit Hilfe von einer oder mehreren optischen Faser (2) verbunden ist.

3. System nach Anspruch 2, bei dem das Ende der optischen Faser (2) am Abfühl-Interferometer (4) in einer Bohrung in einem Substrat (15) und die Membran (12) an einer Endfläche des genannten Substrats (15) oder einer darauf montierten transparenten Platte (21) montiert ist.

4. System nach Anspruch 3, bei dem die Membran (12) so geätzt wird, dass sie eine von einer erhabenen Auflage umgebene, in der Mitte ausgenommene Sensorzone hat, wobei die Auflage so aufgebondet wird, dass die in der Mitte ausgenommene Zone über der Bohrungsachse liegt, wobei die Membran (12) eine Reflexionsfläche (11) darstellt, die einen Teil des zweiten Lichtweges des genannten Abfühl-Interferometers (14) bildet.

5. System nach einem der vorherigen Ansprüche, bei dem das Abfühl-Interferometer (4) einen Sensor, der ein Glassubstrat (15) mit einer Bohrung darin für die Aufnahme einer optischen Faser (2) umfasst, und ein weiteres Substrat (12) aufweist, das so geätzt wird, dass es eine von einer erhabenen Auflage umgebene ausgenommene Zone bildet, wobei die Auflage so gebondet wird, dass die ausgenommene Zone über der Bohrungsachse liegt, **dadurch gekennzeichnet, dass** die Ätztiefe im weiteren Substrat größer als 10 µm ist.

6. System nach Anspruch 5, wobei das genannte Substrat (15) mit der Bohrung ein Rohr oder eine Hülse ist.

7. System nach Anspruch 5 oder 6, bei dem das Substrat (15), das Rohr oder die Hülse aus Borsilikatglas oder Quarzglas besteht.

8. System nach Anspruch 5, 6 oder 7, bei dem die Bohrung einen Anschlag aufweist, an dem die Faser (2) anstoßen kann, wobei die Bohrung eine Durchgangsbohrung ist.

9. System nach einem der Ansprüche 5 bis 8, bei dem die Bohrung eine Sackbohrung ist, wobei die Endfläche der Bohrung einen Anschlag bildet, an der die Faser (2) anstoßen kann.

10. System nach einem der Ansprüche 5 bis 9, bei dem die transparente Platte (21) aus Silizium oder Borsilikatglas oder Quarzglas besteht.

11. System nach einem der Ansprüche 5 bis 10, bei dem ein optischer Hohlraum zwischen dem genannten Ende der optischen Faser (2) und der Membran (12) oder der transparenten Platte (21) und der Membran (12) definiert wird.

12. System nach einem der Ansprüche 5 bis 11, bei dem die optische Faser (2) mit Klebstoff, Lötglas, durch mechanisches Anquetschen oder Zusammenziehen durch Erhitzen des die Bohrung umgebenden Substrats (15) in der Bohrung befestigt wird.

13. System nach einem der Ansprüche 5 bis 12, bei dem ein flexibles Dichtungsmittel zwischen die optische Faser (2) und das die Bohrung umgebende Substrat (15) am freien Ausgang der Bohrung gegeben wird.

14. System nach einem der Ansprüche 5 bis 13, bei dem die Befestigung auf den Abschnitt der optischen Faser (2) innerhalb des Substrats (15) oder dem Rohr oder der Hülse begrenzt ist, das/die dem Ende der Faser (2) am nächsten liegt.

15. System nach einem der Ansprüche 5 bis 14, bei dem die Membran (12) durch anodisches Bonden oder Diffusionsbonden auf die Endfläche des Rohrs (15) oder auf eine darauf montierte transparente Platte (21) gebondet wird.

16. System nach einem der Ansprüche 5 bis 15, bei dem die Reflexionsfähigkeit von einer oder von beiden den Hohlraum definierenden Grenzflächen (10, 11) durch die Bereitstellung einer Reflexionsbeschichtung darauf erhöht wird.

17. System nach einem der vorherigen Ansprüche, bei dem das das Verarbeitungsinterferometer (6) umfassende Substrat ein Silizium-auf-Isolator-Substrat ist.

18. System nach einem der vorherigen Ansprüche, bei dem das Verarbeitungsinterferometer (6) ein Mach-Zehnder- oder Michelson-Interferometer ist.

19. System nach einem der vorherigen Ansprüche, bei dem die Breitband-Lichtquelle(n) (1) auf dem das Verarbeitungsinterferometer (6) umfassenden Substrat integriert ist/sind.

20. System nach einem der vorherigen Ansprüche, bei dem ein Lichtdetektor (9) auf dem das Verarbeitungsinterferometer (6) umfassenden Substrat integriert ist.

21. System nach einem der vorherigen Ansprüche, bei dem die Breitband-Lichtquelle (1) eine Superlumineszenz-Diode ist.

22. System nach einem der vorherigen Ansprüche, bei dem die Kohärenzlänge I_{c} der Breitband-Lichtquelle (22) im Bereich 35-55 µm liegt.

23. System nach einem der vorherigen Ansprüche, bei dem OPDₛ im Bereich 100-160 µm liegt.

24. System nach einem der vorherigen Ansprüche, bei dem die Differenz zwischen OPDₛ und OPDₚ 5 µm oder weniger ist.

25. Abfühlsystem nach einem der vorherigen Ansprüche, das so angeordnet ist, dass es Druck innerhalb eines Motors mit interner Verbrennung fühlt.

26. Verfahren zur Herstellung eines optischen Hohlraums zur Verwendung als Abfühl-Interferometer (4) in einem optischen Abfühlsystem nach einem der vorherigen Ansprüche, wobei das Verfahren die folgenden Schritte umfasst: Mikrobearbeiten oder Ätzen einer Ausnehmung in ein erstes Siliziumsubstrat zur Bildung einer Membran (12); Befestigen eines Endes einer optischen Faser (2) in einer Bohrung in einem Rohr, einer Hülse oder einem weiteren Substrat; optisches Polieren einer Endfläche der optischen Faser (2) und des Rohrs und Bonden der Membran (12) auf die genannte Endfläche des Rohrs durch anodisches Bonden oder Diffusionsbonden, so dass ein optischer Hohlraum zwischen der Membran (12) und der genannten Endfläche der optischen Faser (2) entsteht, und die Länge des optischen Hohlraums im Wesentlichen durch die Tiefe der Ausnehmung bestimmt wird.

27. Verfahren zur Herstellung eines optischen Hohlraums zur Verwendung als Abfühl-Interferometers (4) in einem Abfühlsystem nach einem der Ansprüche 1 - 25, wobei das Verfahren die folgenden Schritte umfasst: Mikrobearbeiten oder Ätzen einer Ausnehmung in ein erstes Siliziumsubstrat zur Bildung einer Membran (12); Bonden der Membran (12) auf eine Fläche einer transparenten Platte durch anodisches Bonden oder Diffusionsbonden, um einen optischen Hohlraum dazwischen zu definieren, dessen Länge im Wesentlichen durch die Tiefe der Ausnehmung bestimmt wird; Bonden der gegenüberliegenden Oberfläche der transparenten Platte (21) auf eine Endfläche eines Rohrs, einer Hülse oder eines weiteren Substrats; und Befestigen eines Endes einer optischen Faser in dem Rohr oder der Hülse oder dem weiteren Substrat.

## Revendications

1. Un système détecteur comprenant au minimum une source de lumière en large bande (1) ayant une longueur de cohérence l_{c},
un interféromètre détecteur (4) comprenant un premier et un deuxième parcours optiques avec une différence de parcours optique OPDₛ entre eux, le deuxième parcours optique étant soumis à une variation dépendant d'un paramètre au voisinage de l'interféromètre détecteur (4) ;
l'interféromètre détecteur (4) étant optiquement connecté à la source de lumière et un interféromètre de traitement (6) comprenant un troisième et un quatrième parcours optiques avec une différence de parcours optique OPDₚ entre eux ;
**caractérisé en ce que :**
l'interféromètre détecteur (4) qui comprend un diaphragme (12) formé à partir d'un premier substrat en silicium dans lequel un retrait est gravé ou micro-usiné dans une face au moins du premier substrat dont le diaphragme (12) est formé, la différence de parcours optique OPDₛ étant déterminée sensiblement par la profondeur du retrait,
l'interféromètre de traitement (6) étant intégré sur un deuxième substrat en silicium, les premier et deuxième parcours optiques comprenant un premier et un deuxième guides d'ondes nervurées (7) intégrés dans le deuxième substrat en silicium et fabriqué pour définir une OPDₚ avec un degré élevé de précision, très facilement répétable et qui peut être maintenu en production en grande série, OPDₛ et OPDₚ étant plus grands que l_{c} et étant définis avec un degré semblable de précision afin de pouvoir être appariés l'un à l'autre avec exactitude de sorte que le module de la différence entre OPDₛ et OPDₚ est plus petit que l_{c}.

2. Un système selon la Revendication 1, dans lequel l'interféromètre détecteur (4) est connecté à la source de lumière (1) et/ou à l'interféromètre de traitement (6) au moyen d'une ou plusieurs fibres optiques (2).

3. Un système selon la Revendication 2, dans lequel l'extrémité de la fibre optique (2) au niveau de l'interféromètre détecteur (4) est montée à l'intérieur d'un alésage dans un substrat (15) et le diaphragme (12) monté sur une face d'extrémité dudit substrat (15) ou une plaque transparente (21) montée sur celui-ci.

4. Un système selon la Revendication 3, dans lequel le diaphragme (12) est gravé pour avoir une région détectrice centralement en retrait, entourée par un support en relief, le support étant collé en place de sorte que la région centralement en retrait se trouve au-dessus de l'axe d'alésage, le diaphragme (12) créant une surface réfléchissante (11) qui fait partie du deuxième parcours optique dudit interféromètre détecteur (14).

5. Un système selon l'une quelconque des revendications précédentes, dans lequel l'interféromètre détecteur (4) inclut un détecteur qui comprend un substrat en verre (15) dans lequel est percé un alésage pour recevoir une fibre optique (2), et un autre substrat (12) qui est gravé pour former une région en retrait entourée par un support en relief, le support étant collé en place de sorte que la région en retrait se trouve au-dessus de l'axe de l'alésage, **caractérisé en ce que** la gravure de l'autre substrat est plus profonde que 10 µm.

6. Un système selon la Revendication 5, ledit substrat (15) incluant l'alésage sous forme d'un tube ou d'une virole.

7. Un système selon la Revendication 5 ou 6, dans lequel le substrat (15), tube ou virole, est en verre au borosilicate ou en verre quartzeux.

8. Un système selon la Revendication 5, 6 ou 7, dans lequel l'alésage inclut une butée contre laquelle la fibre (2) peut abouter, l'alésage étant un alésage traversant.

9. Un système selon l'une quelconque des Revendications 5 à 8, dans lequel l'alésage est un alésage borgne, la face d'extrémité de l'alésage constituant une butée contre laquelle la fibre (2) peut abouter.

10. Un système selon l'une quelconque des Revendications 5 à 9, dans lequel la plaque transparente (21) est en silicium, en verre au borosilicate ou en verre quartzeux.

11. Un système selon l'une quelconque des Revendications 5 à 10, dans lequel une cavité optique est délimitée entre ladite extrémité de la fibre optique (2) et le diaphragme (12) ou la plaque transparente (21) et le diaphragme (12).

12. Un système selon l'une quelconque des Revendications 5 à 11, dans lequel la fibre optique (2) est fixée à l'intérieur de l'alésage par un adhésif, verre liquide, sertissage mécanique ou affaissement, par chauffage, du substrat (15) qui entoure l'alésage.

13. Un système selon l'une quelconque des Revendications 5 à 12, dans lequel un agent de scellement flexible est prévu entre la fibre optique (2) et le substrat (15) qui entoure l'alésage à l'extrémité libre de l'alésage.

14. Un système selon l'une quelconque des Revendications 5 à 13, dans lequel la fixation est limitée à la section de la fibre optique (2) à l'intérieur du substrat (15) ou du tube ou de la virole les plus proches de l'extrémité de la fibre (2).

15. Un système selon l'une quelconque des Revendications 5 à 14, dans lequel le diaphragme (12) est collé à la face d'extrémité du tube (15) ou à la plaque transparente (21) montée sur celui-ci, par soudage anodique ou soudage par diffusion.

16. Un système selon l'une quelconque des Revendications 5 à 15, dans lequel le pouvoir réfléchissant de l'une des interfaces (10, 11)qui délimitent la cavité, ou des deux, est augmenté par la pose d'un enrobage réfléchissant sur celle-ci.

17. Un système selon l'une quelconque des revendications précédentes, dans lequel le substrat qui comprend l'interféromètre de traitement (6) est silicium sur isolant.

18. Un système selon l'une quelconque des revendications précédentes, dans lequel l'interféromètre de traitement (6) est un interféromètre de Mach-Zehnder ou de Michelson.

19. Un système selon l'une quelconque des revendications précédentes, dans lequel la source (ou les sources) de lumière en large bande (1) est/sont intégrée(s) sur le substrat qui comprend l'interféromètre de traitement (6).

20. Un système selon l'une quelconque des revendications précédentes, dans lequel un détecteur de lumière (9) est intégré sur le substrat qui comprend l'interféromètre de traitement (6).

21. Un système selon l'une quelconque des revendications précédentes, dans lequel la source de lumière en large bande (1) est une diode superluminescente.

22. Un système selon l'une quelconque des revendications précédentes, dans lequel la longueur de cohérence l_{c} de la source de lumière en large bande (22) est dans la plage de 35 à 55 µm.

23. Un système selon l'une quelconque des revendications précédentes, dans lequel OPDₛ est dans la plage de 100 à 160 µm.

24. Un système selon l'une quelconque des revendications précédentes, dans lequel la différence entre OPDₛ et OPDₚ égale 5 µm ou moins.

25. Un système détecteur selon l'une quelconque des revendications précédentes, agencé pour détecter une pression à l'intérieur d'un moteur à combustion interne.

26. Un procédé de fabrication d'une cavité optique destiné à être utilisé comme interféromètre détecteur (4) dans un système détecteur optique tel que revendiqué dans l'une quelconque des revendications précédentes, le procédé comprenant les étapes de : micro-usinage ou gravure d'un retrait dans un premier substrat en silicium pour former un diaphragme (12) ; fixation d'une extrémité d'une fibre optique (2) à l'intérieur d'un alésage dans un tube, virole ou autre substrat ; polissage optique d'une face d'extrémité de la fibre optique (2) et du tube et collage du diaphragme (12) à ladite face d'extrémité du tube par soudure anodique ou soudure par diffusion de sorte à former une cavité optique entre le diaphragme (12) et ladite face d'extrémité de la fibre optique (2), et la longueur de la cavité optique est sensiblement déterminée par la profondeur du retrait. %

27. Un procédé de fabrication d'une cavité optique destinée à l'utilisation comme interféromètre détecteur (4) d'un système détecteur tel que revendiqué dans l'une quelconque des Revendications 1 à 25, le procédé comportant les étapes de : micro-usinage ou gravure d'un retrait d'un premier substrat en silicium pour former un diaphragme (12) ; collage du diaphragme (12) à une face d'une plaque transparente par soudure anodique ou soudure par diffusion de sorte à définir entre les deux une cavité optique dont la longueur est sensiblement déterminée par la profondeur du retrait ; collage de la surface opposée de la plaque transparente (21) sur une face d'extrémité d'un tube, d'une virole ou d'un autre substrat ; et fixation d'une extrémité d'une fibre optique à l'intérieur du tube, de la virole ou de l'autre substrat.
